# EUROPEAN PATENT SPECIFICATION

(11) **EP 3 917 118 B1**
(45) Date of publication and mention of the grant of the patent: **26.06.2024**
(21) Application number: 21176334.7
(22) Date of filing: 27.05.2021
(51) Int. Cl.: H04L 61/2517

(54) **DATA REPEATER, DATA REPEATING METHOD, AND REPEATER MANAGEMENT DEVICE**
DATEN-REPEATER, DATENVERSTÄRKUNGSVERFAHREN UND REPEATER-VERWALTUNGSVORRICHTUNG
RÉPÉTITEUR DE DONNÉES, PROCÉDÉ DE RÉPÉTITION DE DONNÉES ET DISPOSITIF DE GESTION DE RÉPÉTITEUR

(30) Priority: 28.05.2020 KR 20200064364
(43) Date of publication of application: 01.12.2021
(73) Proprietor: SK TELECOM CO., LTD., Seoul 04539 (KR)
(72) Inventor: CHOI, Gi Wan, 04539 Seoul (KR)
(74) Representative: Isarpatent

(56) References cited:
- US-A1- 2003 007 486
- SRISURESH M HOLDREGE LUCENT TECHNOLOGIES P: "IP Network Address Translator (NAT) Terminology and Considerations; rfc2663.txt", IP NETWORK ADDRESS TRANSLATOR (NAT) TERMINOLOGY AND CONSIDERATIONS; RFC2663.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 August 1999 (1999-08-01), XP015008446,
- SRISURESH JASMINE NETWORKS K EGEVANG INTEL CORPORATION P: "Traditional IP Network Address Translator (Traditional NAT); rfc3022.txt", TRADITIONAL IP NETWORK ADDRESS TRANSLATOR (TRADITIONAL NAT)?; RFC3022.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 January 2001 (2001-01-01), XP015008805,
- PENNO CISCO S PERREAULT VIAGENIE S KAMISET CONSULTANT M BOUCADAIR FRANCE TELECOM K NAITO R: "Network Address Translation (NAT) Behavioral Requirements Updates; draft-penno-behave-rfc4787-5382-5508-bis-0 4.txt", NETWORK ADDRESS TRANSLATION (NAT) BEHAVIORAL REQUIREMENTS UPDATES; DRAFT-PENNO-BEHAVE-RFC4787-5382-5508-BIS-0 4.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 7 January 2013 (2013-01-07), pages 1-15, XP015089360, [retrieved on 2013-01-07]

## Description

### BACKGROUND OF THE INVENTION

### 1. Field of the invention

The present disclosure relates to a technology that enables 1:1 communication between multiple repeaters and a repeater management device that manages the multiple repeaters in an in-building environment including multiple repeaters (RUs, remote units).

### 2. Description of the Prior Art

As a communication system evolves from a 4G LTE/LTE-advanced system to a 5G NR system, and cell capacity easily increases based on a multiuser multiple-input multiple-output (MU-MIMO) technology, a 5G NR service can be provided by reusing space-time frequency resources for each "floor and separated place" in a building.

Accordingly, technologies for servicing in-building environments (hereinafter, in-building solutions) are being studied in various ways. One method of attracting attention from among the technologies is to use a repeater (RU, remote unit) on the floors and separated places in a building.

An in-building solution using a repeater (RU) is based on one base station module (hereinafter, DU: digital unit) and multiple repeaters (RUs) that are connected to the DU and distributedly placed in a building.

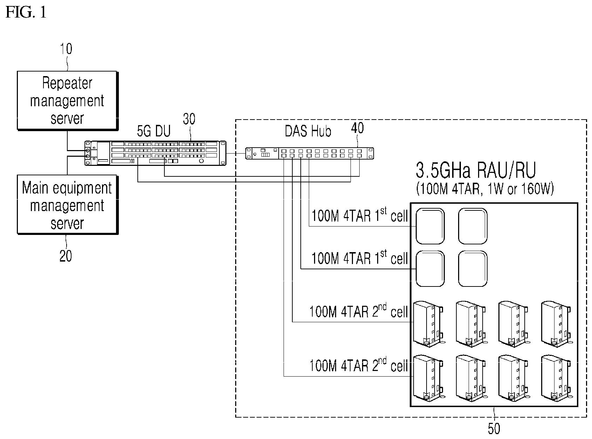

In this regard, referring to FIG. 1, an in-building solution (system) can be described to include a DU 30, a hub 40, and multiple repeaters (RUs) 50 in an in-building environment.

The DU 30 is a unit responsible for most digital processing in a base station.

The hub 40 is located at a central office or forwardly located in a site (e.g., a building) like the DU 30, so as to distribute the same signal to the multiple repeaters 50 in a forward direction (downlink) and combines signals received from the multiple repeaters 50 in a reverse direction (uplink) via multiple ports.

The repeaters (RUs) 50 are connected to respective ports of the hub 40, and multiple repeaters (RUs) 50 may be connected to one port via a cascade structure.

However, the DU 30 and the repeaters (RUs) 50 may be provided by different manufacturers, and in this case, separate management servers are required to manage the DU 30 and the repeaters (RUs) 50.

FIG. 1 illustrates a main equipment management server 20 that manages the DU 30, and a repeater management server 10 that manages the repeaters (RUs) 50.

When the management servers managing the DU 30 and the repeaters (RUs) 50 are separately implemented in an in-building environment, the DU 30 needs to provide a role as a simple communication path to enable communication between the repeater management server 10 and the repeaters (RUs) 50, and there is a need for a method enabling the repeater management server 10 to transfer a packet received from the repeater management server 10 to an intended repeater (RU) among the multiple repeaters (RUs) 50.

Non-patent Literature "IP network address translator (NAT) terminology and considerations", published by INTERNET ENGINEERING TASK FORCE, provides a method by which IP addresses are mapped from one realm to another, in an attempt to provide transparent routing to hosts.

Patent Literature US 2003/007486 A1 provides a method and apparatus for communicating data units (e.g., Internet Protocol or IP packets) between devices on one or more networks includes storing address and/or port translation information, and receiving a data unit having a source address and port and a destination address and port.

Non-patent Literature "Traditional IP network address translator", published by INTERNET ENGINEERING TASK FORCE, provides a method by which IP address are mapped from one group to another, transparent to end user.

### SUMMARY OF THE INVENTION

The present invention is to provide a method for data transmission/reception, which enables 1:1 communication between multiple repeaters (RUs) and a repeater management device (server) managing the same in an in-building environment.

According to the present invention, a data repeater and a repeater management device are provided, as defined in the appended set of claims.

According to the present disclosure, a data transmission/reception method that enables 1:1 communication between multiple repeaters (RUs) and a repeater management device (server) is realized, thereby repeater (RU) management performance being able to be guaranteed without adding a complicated process or changing hardware when the management server that manages the repeaters (RUs) is separately implemented in an in-building environment, and therefore improvement of the quality of an in-building service can be expected.

### BRIEF DESCRIPTION OF THE DRAWINGS

The above and other aspects, features, and advantages of the present disclosure will be more apparent from the following detailed description taken in conjunction with the accompanying drawings, in which:
FIG. 1 is an exemplary diagram showing an example of an in-building environment (solution) to which the present disclosure is applied;
FIG. 2 is an exemplary diagram showing a mapping relationship between a port number and an IP address used according to the invention;
FIG. 3 is a block diagram showing a configuration of a data repeater according to the invention;
FIG. 4 is a block diagram showing a configuration of a repeater management device according to the invention;
FIG. 5 is an exemplary diagram for explaining an example of using a mapping relationship (e.g., a mapping table) according to the invention; and
FIG. 6 is a flowchart showing a flow of a data repeating method according to the invention.

### DETAILED DESCRIPTION OF THE EXEMPLARY EMBODIMENTS

Hereinafter, various embodiments of the present disclosure will be described with reference to the accompanying drawings.

In a TCP/IP network, a port number refers to a number assigned to distribute incoming traffic to appropriate programs running in a computer, and this corresponds to a logical assignment, not a physical plug or socket.

When communication using a network is performed between two communication nodes, user data (packet) departing from a source goes through each layer of TCP/IP and finally arrives at a computer having a destination address (IP), and a node receiving the packet removes an address field used for transmission and passes only data in the packet to an application program. A port number may be used to identify an application program, to which the data needs to be transferred, from among running applications.

The port number ranges from 0 to 65536, and port numbers from 0 to 1024 are reserved to be used by services with certain privileges.

For example, FTP is appointed to number 21, Telnet is appointed to number 23, SMTP (mail) is appointed to number 25, HTTP is appointed to number 80, and the like, and port numbers greater than 1024 are assigned for application services or are temporarily assigned each corresponding time.

The invention is to propose a technique that enables the repeater management server to communicate with a desired repeater (RU) by using (utilizing) the port number.

Specifically, the present disclosure is to propose a data transmission/reception method enabling 1:1 communication between multiple repeaters (RUs) and a repeater management device (server) that manages the multiple repeaters (RUs), by using port numbers of the above concept in an in-building environment (solution) using repeaters (RUs).

In this regard, referring to FIG. 1, an in-building solution (system) including a DU 30, a hub 40, and multiple repeaters (RUs) 50 in an in-building environment may be described as an embodiment.

The DU 30 here is a unit responsible for most digital processing in a base station.

The hub 40 is, as the DU 30, located at a central office or forwardly located in a site (e.g., a building) so as to distribute the same signal to the multiple repeaters 50 in a forward direction (downlink) and combines, in a reverse direction (uplink), signals received from the multiple repeaters 50, via multiple ports.

The repeaters (RUs) 50 are connected to respective ports of the hub 40, and multiple repeaters (RUs) 50 may be connected via a cascade structure even within the same port.

However, the DU 30 and the repeaters (RUs) 50 may be provided by different manufacturers, and in this case, separate management servers are required for managing the DU 30 and the repeaters (RUs) 50.

FIG. 1 illustrates a main equipment management server 20 as a management server that manages the DU 30, and a repeater management server 10 as a management server that manages the repeaters (RUs) 50.

When the management servers managing the DU 30 and the repeaters (RUs) 50 are separately implemented in an in-building environment, the DU 30 needs to provide a role as a simple communication path to enable communication between the repeater management server 10 and the repeaters (RUs) 50, and there is a need for a method enabling the repeater management server 10 to transfer a packet received from the repeater management server 10 to an intended repeater (RU) among the multiple repeaters (RUs) 50.

Accordingly, the present disclosure is to implement a data transmission/reception method in a node (e.g., DU and hub) between repeaters (RUs) and a repeater management device (server) enabling 1:1 communication between the multiple repeaters (RUs) and the repeater management device (server) that manages the multiple repeaters (RUs).

The data transmission/reception method proposed and implemented in the present disclosure is based on mapping relationships (e.g., a mapping table) between IP addresses and port numbers assigned to respective repeaters (RUs), and the mapping relationships (e.g., a mapping table) need to be pre-determined.

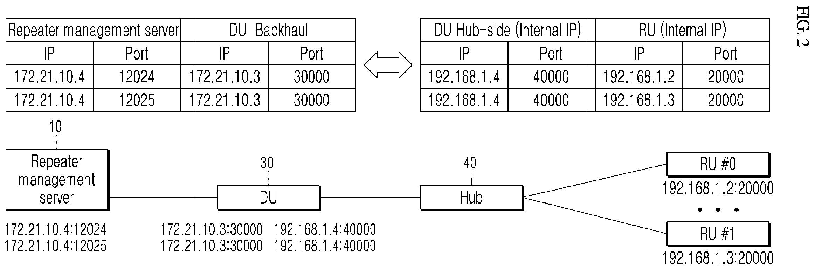

FIG. 2 shows an example of determining a mapping relationship (e.g., a mapping table) between a port number and an IP address used in the present disclosure.

As illustrated in FIG. 2, the following should be determined for 1:1 communication between multiple repeaters (RUs) and a repeater management device (server) in the present disclosure.
Port number and IP address of repeater management device (server)
Port number and IP address in DU backhaul direction (fixed)
Port number and IP address in DU repeater direction (fixed)
Port number and IP address of each repeater (RU) (fixed)

According to an example, in FIG. 2, it is assumed that an IP address of the repeater management server 10 is fixed to 172.21.10.4, an IP address and a port number in a DU 30 backhaul direction are fixed to 172.21.10.3 and 30000, an IP address and a port number in a DU 30 repeater direction are fixed to 192.168.1.4 and 40000, and a port number of each repeater (RU) is fixed to 20000.

According to the invention, when communication between one to multiple nodes, that is, communication between one repeater management server 10 and multiple repeaters (RUs) is performed, a repeater (RU) communicating with the repeater management server 10 is specified by dynamically using a port number (port numbers of respective repeaters (RUs) in the mapping table) of the repeater management server 10 and an IP address (IP address of respective repeaters (RUs) in the mapping table) of the repeater (RU), on the basis of mapping relationships between the port numbers and the IP addresses assigned to the respective repeaters (RUs).

That is, when the repeater management server 10 transmits downlink data (packet), the repeater management server 10 uses a port number assigned to each repeater (RU) as a source port number for the purpose of specifying a repeater (RU) to which the repeater management server 10 is to transfer the data (packet) from among the multiple repeaters (RUs) 50.

Referring to FIG. 2, when the repeater management server 10 is to transmit data (packet) to repeater (RU) #0, the repeater management server 10 includes port number 12024 assigned to repeater (RU) #0 in source port information of the data (packet) for communication with repeater (RU) #0, so as to use, as a source port number, port number 12024 assigned to repeater (RU) #0.

Here, the number of port numbers, which are required to be used as source port numbers by the repeater management server 10, should be the same as the total number of repeaters (RUs) connected to the DU 30.

For example, if up to 6 hubs can be connected per DU, and 16 ports per hub and 4 cascade stages per port are allowed, the repeater management server 10 requires a total of 384 (= 6 x 16 x 4 = 384) port numbers for each repeater (RU), which are to be used as the source port numbers.

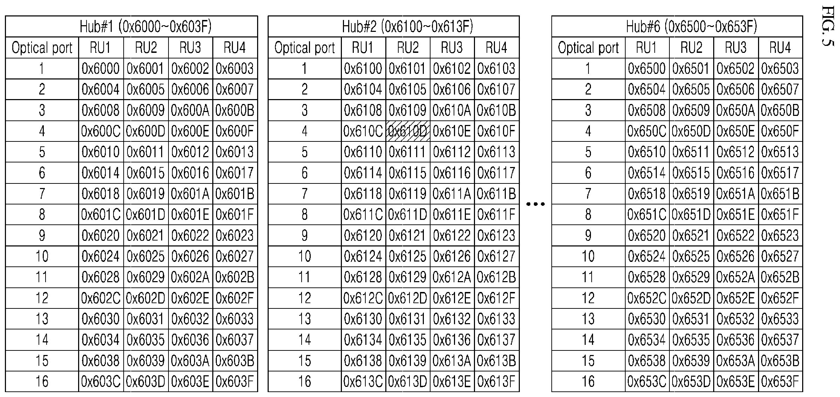

Referring to FIG. 5, in a case of the mapping table in the present disclosure, if it is assumed that up to 6 hubs can be connected per DU, and 16 ports per hub and 4 cascade stages per port are allowed, the repeater management server 10 may use port number 0x610D of a Hub#2-Port 4-Cascade stage 2 RU, as the source port number in order to communicate with the corresponding RU.

In the present disclosure, mapping relationships (e.g., the mapping table) between port numbers and IP addresses of respective repeaters (RUs) may be generated in the repeater management server 10, may be generated in nodes (e.g., DU and hub) between the repeaters (RUs) and the repeater management server 10, and may be generated in a separate node.

The mapping relationships (e.g., the mapping table) generated as described above are stored in nodes (e.g., DU, hub) that is to be implemented by the present disclosure, and the repeater management server 10 should also be aware of this.

Hereinafter, for the convenience of description, an embodiment of generating the aforementioned mapping relationships (e.g., the mapping table) in the repeater management server 10 will be described.

The present disclosure proposes a method enabling 1:1 communication between multiple repeaters (RUs) and a repeater management device (server) on the basis of mapping relationships (e.g., a mapping table) between port numbers and IP addresses of the respective repeaters (RUs), which are determined as described above.

Specifically, the present disclosure is to propose data repeaters (e.g., DU and hub) located between repeaters (RUs) and a repeater management device (server) for realizing the method.

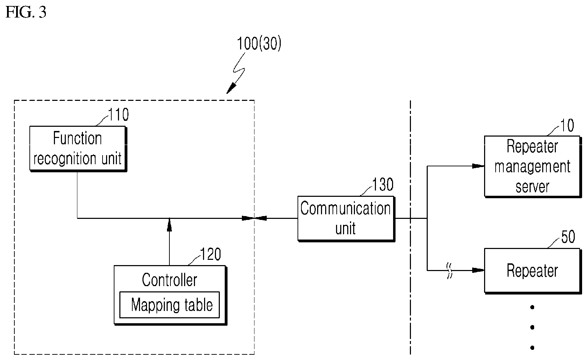

FIG. 3 shows a configuration of a data repeater as a node (e.g., DU and Hub) realizing a proposed method of the present disclosure.

Hereinafter, a configuration of a data repeater according to an embodiment of the present disclosure will be described in detail with reference to FIG. 3.

As illustrated in FIG. 3, a data repeater 100 according to an embodiment of the present disclosure may include a function recognition unit 110 and a controller 120.

The data repeater 100 of the present disclosure may be implemented in a node (e.g., DU and hub) between repeaters (RUs) and a repeater management device (server). Hereinafter, for the convenience of description, an embodiment implemented in the DU 30 will be described.

The data repeater 100 according to an embodiment of the present disclosure may further include, in addition to the aforementioned elements, a communication unit 130 that is in charge of communication with the repeater management server 10 and the repeaters (RUs).

The communication unit 130 includes, for example, an antenna system, an RF transceiver, one or more amplifiers, a tuner, one or more oscillators, a digital signal processor, a codec chipset, and a memory, but is not limited thereto. The communication unit 130 may include any known circuit that performs as the above elements.

All or at least some of the data repeater 100 of the present disclosure may be implemented in a form of a hardware module or a software module, or may be implemented in a form in which a hardware module and a software module are combined.

The software module may be understood as, for example, instructions executed by a processor configured to control an operation in the data repeater 100, and the instructions may be mounted in a separate memory within the data repeater 100.

The data repeater 100 according to an embodiment of the present disclosure realizes a new method proposed in the present disclosure. Hereinafter, each element in the data repeater 100 for realizing the new method will be described in more detail.

The function recognition unit 110 serves to recognize, when data is received, a function to be provided for the received data, on the basis of the received data.

Specifically, when a specific port number assigned to a function of a communication path between one to multiple nodes is identified in destination port information of the received data, the function recognition unit 110 may recognize that a function as the communication path between one to multiple nodes needs to be provided.

The one to multiple nodes refer to the aforementioned repeater management server 10 and multiple repeaters (RUs) 50 managed by the repeater management server 10.

That is, when a specific port number assigned to a function of a communication path between the repeater management server 10 and the multiple repeaters (RUs) 50 is identified in the destination port information of the received data, the function recognition unit 110 may recognize that a function as the communication path between the repeater management server 10 and the multiple repeaters (RUs) 50 needs to be provided.

As a result of recognition of the function recognition unit 110, when it is required to provide the function as the communication path between the repeater management server 10 and the multiple repeaters (RUs) 50, the controller 120 serves to, when the received data is transmitted, enable the data, which is transmitted via conversion between an IP address and a port number of the data, to be specified to one of the multiple repeaters (RUs) 50.

Specifically, it is assumed that the controller 120 is able to include or identify mapping relationships, that is, a mapping table between IP addresses and port numbers assigned to the respective repeaters (RUs).

Accordingly, in a case where it is required to provide the function as the communication path between the repeater management server 10 and the multiple repeaters (RUs) 50, when the received data is transmitted to a destination node (the repeater (RU) for downlink, and the repeater management server 10 for uplink) on the basis of the aforementioned mapping table, the controller 120 may perform conversion between the IP address and the port number of the data.

Hereinafter, when the function as the communication path is provided, a procedure of conversion between the IP address and the port number of the data will be described in more detail.

According to a specific embodiment, in a case of a downlink in which the received data (packet) is transferred to one of the multiple repeaters (RUs) 50, the controller 120 may use, as destination address information, a specific IP address mapped with a port number in source port information of the data (packet) on the basis of the mapping table, and transmit the data (packet) to one node, i.e., one repeater (RU), specified by the aforementioned IP address from among multiple nodes, i.e., the multiple repeaters (RUs) 50.

When describing, in an assumption of the above, transmission of the data (packet) to the repeater (RU) by the repeater management server, the repeater management server 10 in the present disclosure identifies a port number (e.g., 12024) corresponding to a repeater (e.g., RU #0) desired for communication, with reference to the mapping table.

The repeater management server 10 performs transmission to the DU 30 by using the identified port number (e.g., 12024) of a repeater (e.g., RU #0), as a source port number in the source port information of the data (packet) to be transmitted to the repeater (e.g., RU #0) (see FIG. 2).

The destination IP and destination port number of the data (packet) transmitted by the repeater management server 10 may be used as follows (see FIG. 2).
Destination IP: IP address in backhaul direction of DU (e.g., 172.21.10.3)
Destination port number: fixed specific number (e.g. 30000)

When a specific port number (e.g., 30000) assigned to the function of the communication path between the repeater management server 10 and the multiple repeaters (RUs) 50 is identified in the destination port information of the received data, the data repeater 100 (particularly, the function recognition unit 110) of the present disclosure, which is implemented in the DU 30, may recognize that the function as the communication path between the repeater management server 10 and the multiple repeaters (RUs) 50 needs to be provided.

Accordingly, in order to provide the function as the communication path, the data repeater 100 (particularly, the controller 120) of the present disclosure, which is implemented in the DU 30, may identify the source port number in the source port information of the received data (packet), that is the source port number, and may identify a specific IP address (e.g., 192.168.1.2) of the repeater (e.g., RU #0), which is mapped with the port number (e.g., 12024) in the mapping table.

Accordingly, the data repeater 100 (particularly, the controller 120) of the present disclosure, which is implemented in the DU 30, transmits the received data (packet) to the destination node, i.e., the repeater (RU) by using the specific IP address (e.g., 192.168.1.2) identified on the basis of the mapping table as the destination address information (see below). That is, the received data (packet) may be transmitted to the repeater (e.g., RU #0) of the IP address (e.g., 192.168.1.2) specified using the source port number by the repeater management server 10 from among the multiple repeaters (RUs) 50.
Source IP: IP address in DU 30 repeater direction
Source port number: fixed specific number (e.g., 40000)
Destination IP: IP address of RU found in mapping table (e.g., 192.168.1.2)
Destination port number: fixed specific number (e.g. 20000)

Therefore, the data (packet), which is transmitted using, as the source port number, the port number (e.g., 12024) corresponding to the repeater (e.g., RU #0) desired for communication by the repeater management server 10, may be transferred to the repeater (e.g., RU #0) specified by the IP address mapped with the port number (e.g., 12024), by conversion between the destination IP address and the source port number, which is performed based on the source port number (e.g., 12024) by the data repeater 100 (DU or hub) of the present disclosure.

Accordingly, in the present disclosure, the aforementioned node, i.e., the repeater (e.g., RU #0), which receives downlink data, among the multiple nodes, i.e., the multiple repeaters (RUs) 50 may recognize that the received data is the data (packet) received from the node as the management server, i.e., the repeater management server 10, when the specific port number (e.g., 20000) assigned to the function of the communication path is identified in the destination port information of the received information.

Hereinafter, when the function of the communication path is provided, a procedure of conversion between the IP address and the port number of the data will be described with respect to an uplink transmission.

According to a specific embodiment, in a case of an uplink in which the received data (packet) is transferred from one of multiple nodes, that is, an uplink in which the received data (packet) is transferred from one of the multiple repeaters (RUs) 50 to the repeater management server 10, the controller 120 uses, as destination port information, a specific port number mapped with an IP address in source port information of the data (packet) on the basis of the mapping table, so as to enable the node (repeater) having transmitted the data (packet) among the multiple nodes, i.e., the multiple repeaters (RUs) 50, to be specified by the aforementioned specific port number.

When describing transmission of the data (packet) by one repeater (e.g., RU #0) among the multiple repeaters (RUs) 50 in an assumption of the above, the repeater (e.g., RU #0) in the present disclosure may transmit the data (packet) to the DU 30 or the hub 40 so as to respond to the repeater management server 10, wherein the source IP, the source port number, the destination IP, and the destination port number may be used as follows (see FIG. 2).
Source IP: repeater's own IP address (e.g., 192.168.1.2)
Source port number: fixed specific number (e.g., 20000)
Destination IP: source IP address of packet received from DU 30 or hub 40 in relation to current response
Destination port number: fixed specific number (e.g. 40000)

When a specific port number (e.g., 40000) assigned to the function of the communication path between the repeater management server 10 and the multiple repeaters (RUs) 50 is identified in the destination port information of the received data (packet), the data repeater 100 (particularly, the function recognition unit 110) of the present disclosure, which is implemented in the DU 30, may recognize that the function as the communication path between the repeater management server 10 and the multiple repeaters (RUs) 50 needs to be provided.

Accordingly, in order to provide the function as the communication path, the data repeater 100 (particularly, the controller 120) of the present disclosure, which is implemented in the DU 30, may identify the IP address in the source address information of the received data (packet), that is, the source IP address, and may identify the specific IP address (e.g., 12024) of the repeater (e.g., RU #0), which is mapped with the port number (e.g., 192.168.1.2) in the mapping table.

Accordingly, the data repeater 100 (particularly, the controller 120) of the present disclosure, which is implemented in the DU 30, transmits the received data (packet) to the repeater management server 10, i.e., the destination node by using the specific port number (e.g., 12024) identified on the basis of the mapping table as the destination port information (see below). That is, the repeater (e.g., RU #0) having transmitted the data (packet) is specified from the multiple repeaters (RUs) 50 by the destination port information.
Source IP: IP address in DU 30 backhaul direction
Source port number: fixed specific number (e.g., 30000)
Destination IP: IP address of repeater management server 10
Destination port number: RU port number found in mapping table (e.g., 12024)

Accordingly, the data (packet) transmitted in response by the repeater (e.g., RU #0) may be specified by the port number (e.g., 12024) mapped with the IP address of the repeater (e.g., RU #0) having transmitted the data (packet) so as to be transferred to the repeater management server 10, by conversion between the source IP address and the destination port number, which is performed on the basis of the source IP address by the data repeater 100 (DU or hub) of the present disclosure.

According to the present disclosure, when the port number (e.g., 12024) in the mapping table is identified in the destination port information of the received data, the node receiving uplink data, that is, the repeater management server 10, may identify the repeater (e.g., RU #0) to which the port number (e.g., 12024) is assigned, and thereby recognizing that the received data has been transmitted from the identified repeater (e.g., RU #0).

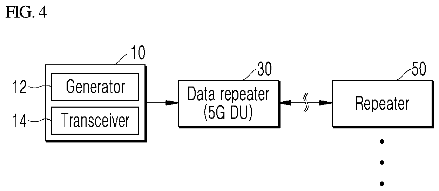

FIG. 4 illustrates, as an example, a configuration of a repeater management device for realizing a method enabling 1:1 communication between multiple repeaters (RUs) and the repeater management devices (servers) in the present disclosure.

As illustrated in FIG. 4, the repeater management device 10 according to an embodiment of the present disclosure may include a generator 12 and a transceiver 14.

The generator 12 serves to assign port numbers matching respective repeaters (RUs) connected to a DU, and generate a mapping table between the assigned port numbers and IP addresses of the respective repeaters (RUs).

That is, when describing by referring to reference numbers in the above description, the generator 12 allocates port numbers matching the respective multiple repeaters (RUs) 50 connected to the DU 30, and generates a mapping table between the port numbers assigned to the respective multiple repeaters (RUs) 50 and respective IP addresses.

The repeater management device 10 (particularly, the generator 12) shares the mapping table generated as the above with the aforementioned data repeater 100 (DU or hub) of the present disclosure in various ways, so as to enable the data repeater 100 (DU or hub) of the present disclosure to hold or identify the mapping table.

The transceiver 14 serves to transmit packets to or receive packets from the respective repeaters according to conversion between the port numbers and the IP addresses processed by referring to the mapping table in the DU.

That is, when describing by referring to reference numbers in the above description, the transceiver 14 may transmit a packet to or receive a packet from a specific repeater (e.g., RU #0) for communication from among the multiple repeaters (RUs) 50, according to conversion between the port numbers and the IP addresses processed by referring to the mapping table in the DU 30, more precisely, the aforementioned data repeater 100 (DU or hub) of the present disclosure.

For example, in a case of downlink, the transceiver 14 may identify, by referring to the mapping table, a port number (e.g., 12024) corresponding to a repeater (e.g., RU #0) desired for communication, and may perform transmission to the DU 30 by using the identified port number (e.g., 12024) of the repeater (e.g., RU #0), as a source port number in source port information of data (packet) transmitted to the repeater (e.g., RU #0).

In this case, when the data (packet) is transmitted using the port number (e.g., 12024) corresponding to the repeater (e.g., RU #0) desired for communication by the repeater management server 10 as the source port number, the data (packet) may be transferred to the repeater (e.g., RU #0) specified by an IP address mapped with the port number (e.g., 12024), by conversion between a destination IP address and the source port number, which is performed based on the source port number (e.g., 12024) by the data repeater 100 (DU or hub) of the present disclosure.

In a case of uplink, the data (packet) transmitted in response by the repeater (e.g., RU #0) may be specified by the port number (e.g., 12024) mapped with the IP address of the repeater (e.g., RU #0) having transmitted the data (packet) so as to be transferred to the repeater management server 10, by conversion between the source IP address and the destination port number, which is performed on the basis of the source IP address by the data repeater 100 (DU or hub) of the present disclosure.

Accordingly, when the port number (e.g., 12024) in the mapping table is identified in the destination port information of the received data, the transceiver 14 may identify the repeater (e.g., RU #0) to which the port number (e.g., 12024) is assigned, and thereby recognizing that the received data has been received from the identified repeater (e.g., RU #0).

As described above, the present disclosure realizes a new method that enables 1:1 communication between multiple repeaters RUs and a repeater management device (server) in a node (e.g., DU and hub) between the repeaters (RUs) and the repeater management device (server) on the basis of mapping relationships (e.g., a mapping table) between IP addresses and port numbers assigned to the respective repeaters (RUs).

According to the present disclosure, by realizing a data transmission/reception method that enables 1:1 communication between multiple repeaters (RUs) and a repeater management device (server), repeater (RU) management performance can be guaranteed without adding a complicated process or changing hardware even if the management server that manages the repeaters (RUs) is separately implemented in an in-building environment, and therefore improvement of the quality of an in-building service can be expected.

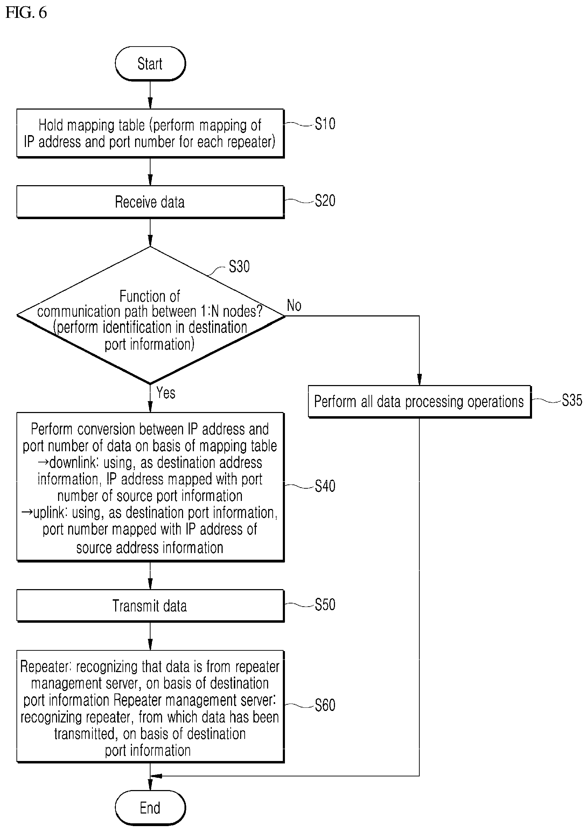

Hereinafter, a data repeating method according to an embodiment of the present disclosure will be described with reference to FIG. 6.

For the convenience of explanation, the data repeater 100 (implemented in DU or Hub) will be described as a device for performing the data repeating method of the present disclosure.

According to the data repeating method of the present disclosure, the data repeater 100 holds (S10) mapping relationships between port numbers and IP addresses assigned to respective repeaters (RUs), that is, a mapping table.

According to an example, for 1: 1 communication between the multiple repeaters (RUs) and the repeater management server 10, a mapping table as shown in FIG. 5 may be generated/held.

The number of port numbers, which are required to be used as source port numbers by the repeater management server 10, that is, the number of port numbers to be assigned to the respective repeaters (RUs), should be the same as the total number of repeaters (RUs) connected to the DU 30.

For example, if up to 6 hubs can be connected per DU, and 16 ports per hub and 4 cascade stages per port are allowed, the repeater management server 10 requires a total of 384 (= 6 x 16 x 4 = 384) port numbers of each repeater (RU), which are to be used as the source port numbers.

Referring to FIG. 5, in a case of the mapping table in the present disclosure, if it is assumed that up to 6 hubs can be connected per DU, and 16 ports per hub and 4 cascade stages per port are allowed, the repeater management server 10 may use port number 0x610D of a Hub#2-Port 4-Cascade stage 2 RU, as the source port number in order to communicate with the corresponding RU.

According to the data repeating method of the present disclosure, when the data is received (S20), the data repeater 100 may recognize that the function of the communication path between one to multiple nodes needs to be provided in a case of a specific port number assigned to a function of a communication path between one to multiple nodes being identified in destination port information of the received data (S30 Yes).

For description of downlink data (packet) reception, according to the data repeating method of the present disclosure, when downlink data (packet) transferred to one of the multiple repeaters (RUs) 50 is received in S20, the data repeater 100 may transmit (S40,S50), using, as destination address information, a specific IP address mapped with a port number in source port information of the data (packet) on the basis of the mapping table, the data (packet) to one node, i.e., one repeater (RU), specified by the aforementioned IP address from among multiple nodes, i.e., the multiple repeaters (RUs) 50.

When describing, in an assumption of the above, transmission of the data (packet) to the repeater (RU) by the repeater management server, the repeater management server 10 in the present disclosure identifies a port number (e.g., 12024) corresponding to a repeater (e.g., RU #0) desired for communication, with reference to the mapping table.

The repeater management server 10 performs transmission to the DU 30 by using the identified port number (e.g., 12024) of a repeater (e.g., RU #0) as a source port number in the source port information of the data (packet) to be transmitted to the repeater (e.g., RU #0) (see FIG. 2).

The destination IP and destination port number of the data (packet) transmitted by the repeater management server 10 may be used as follows (see FIG. 2).
Destination IP: IP address in backhaul direction of DU (e.g., 172.21.10.3)
Destination port number: fixed specific number (e.g. 30000)

According to the data repeating method of the present disclosure, when a specific port number (e.g., 30000) assigned to the function of the communication path between the repeater management server 10 and the multiple repeaters (RUs) 50 is identified (S30 Yes) in the destination port information of the received data (packet), the data repeater 100 recognizes that the function as the communication path between the repeater management server 10 and the multiple repeaters (RUs) 50 needs to be provided.

Therefore, according to the data repeating method of the present disclosure, in order to provide the function as the communication path, the data repeater 100 identifies the source port number in the source port information of the received data (packet), that is, the source port number, and identifies a specific IP address (e.g., 192.168.1.2) of the repeater (e.g., RU #0), which is mapped with the port number (e.g., 12024) in the mapping table, so as to perform conversion (S40) using the identified specific IP address as destination address information.

According to the data repeating method of the present disclosure, when the data repeater 100 transmits/transfers the received data (packet) to the destination node, that is, the repeater (RU), the specific IP address (e.g., 192.168.1.2) identified on the basis of the mapping table is used as the destination address information (see below), so that the received data (packet) may be transmitted to the repeater (e.g., RU #0) of the IP address (e.g., 192.168.1.2) from among the multiple repeaters (RUs) 50 specified using the source port number by the repeater management server 10.
Source IP: IP address in DU 30 repeater direction
Source port number: fixed specific number (e.g., 40000)
Destination IP: IP address of RU found in mapping table (e.g., 192.168.1.2)
Destination port number: fixed specific number (e.g. 20000)

Therefore, the data (packet), which is transmitted using, as the source port number, the port number (e.g., 12024) corresponding to the repeater (e.g., RU #0) desired for communication by the repeater management server 10, may be transferred to the repeater (e.g., RU #0) specified by the IP address mapped with the port number (e.g., 12024), by conversion between the destination IP address and the source port number, which is performed based on the source port number (e.g., 12024) by the data repeater 100.

Accordingly, the aforementioned node, i.e.,, the repeater (e.g., RU #0), which receives downlink data, among the multiple nodes, i.e., the multiple repeaters (RUs) 50 may recognize (S60) that the received data is the data (packet) received from the node as the management server, i.e., the repeater management server 10, when the specific port number (e.g., 20000) assigned to the function of the communication path is identified in the destination port information of the received information.

For description of uplink data (packet) reception, according to the data repeating method of the present disclosure, when uplink data (packet) transferred from one of the multiple repeaters (RUs) 50 to the repeater management server 10 is received in S20, the data repeater 100 uses, as destination port information, the specific port number mapped with the IP address in source port information of the data (packet) on the basis of the mapping table, so as to enable the node (repeater) transmitting the data (packet) among the multiple nodes, i.e., the multiple repeaters (RUs) 50, to be specified by the aforementioned specific port number.

When describing, in an assumption of the above, transmission of the data (packet) by one repeater (e.g., RU #0) among the multiple repeaters (RUs) 50, the repeater (e.g., RU #0) in the present disclosure may transmit the data (packet) to the DU 30 or the hub 40 so as to respond to the repeater management server 10, wherein the source IP, the source port number, the destination IP, and the destination port number may be used as follows (see FIG. 2).
Source IP: repeater's own IP address (e.g., 192.168.1.2)
Source port number: fixed specific number (e.g., 20000)
Destination IP: source IP address of packet received from DU 30 or hub 40 in relation to current response
Destination port number: fixed specific number (e.g. 40000)

According to the data repeating method of the present disclosure, when a specific port number (e.g., 40000) assigned to the function of the communication path between the repeater management server 10 and the multiple repeaters (RUs) 50 is identified (S30 Yes) in the destination port information of the received data (packet), the data repeater 100 recognizes that the function as the communication path between the repeater management server 10 and the multiple repeaters (RUs) 50 needs to be provided.

Accordingly, according to the data repeating method of the present disclosure, in order to provide the function as the communication path, the data repeater 100 identifies the IP address in the source address information of the received data (packet), that is, the source IP address, and identifies the specific port number (e.g., 12024) of the repeater (e.g., RU #0) mapped to the IP address (e.g., 192.168.1.2) in the mapping table, so as to perform conversion (S40) using the identified specific port number as the destination port information.

According to the data repeating method of the present disclosure, when the data repeater 100 transmits/transfers the received data (packet) to the repeater management server 10, i.e., the destination node, the specific port number (e.g., 12024) identified on the basis of the mapping table is used as the destination port information (see below), so that the repeater (e.g., RU #0) transmitting the data (packet) is specified (S50) by the destination port information among the multiple repeaters (RUs) 50.
Source IP: IP address in DU 30 backhaul direction
Source port number: fixed specific number (e.g., 30000)
Destination IP: IP address of repeater management server 10
Destination port number: RU port number found in mapping table (e.g., 12024)

Accordingly, the data (packet) transmitted in response by the repeater (e.g., RU #0) may be specified by the port number (e.g., 12024) mapped with the IP address of the repeater (e.g., RU #0) having transmitted the data (packet) so as to be transferred to the repeater management server 10, by conversion between the source IP address and the destination port number, which is performed on the basis of the source IP address by the data repeater 100.

Accordingly, when the port number (e.g., 12024) in the mapping table is identified in the destination port information of the received data, the node receiving uplink data, that is, the repeater management server 10, may identify the repeater (e.g., RU #0) to which the port number (e.g., 12024) is assigned, and thereby recognizing (S60) that the received data has been received from the identified repeater (e.g., RU #0).

As described above, the present disclosure realizes a new method that enables 1:1 communication between multiple repeaters RUs and a repeater management device (server) by a node (e.g., DU and hub) between the repeaters (RUs) and the repeater management device (server) on the basis of mapping relationships (e.g., a mapping table) between IP addresses and port numbers assigned to the respective repeaters (RUs).

Therefore, according to the present disclosure, by realizing a data transmission/reception method that enables 1: 1 communication between multiple repeaters (RUs) and a repeater management device (server), repeater (RU) management performance can be guaranteed without adding a complicated process or changing hardware even if the management server that manages the repeaters (RUs) is separately implemented in an in-building environment, and therefore improvement of the quality of an in-building service can be expected.

The data repeating method according to an embodiment of the present disclosure may be implemented in the form of program commands executable via various computer means so as to be recorded in a computer-readable medium. The computer-readable medium may include each of program commands, data files, data structures, etc., or a combination thereof. The program commands recorded in the medium may be specially designed and configured for the present disclosure, or may be known and available to those skilled in the computer software field. Examples of the computer-readable recording media include magnetic media such as a hard disk, a floppy disk, and a magnetic tape, optical media such as CD-ROM and DVD, magneto-optical media such as a floptical disk, and a hardware device, such as ROM, RAM, and a flash memory, specially configured to store and perform program commands. Examples of the program commands include a high-level language code executable by a computer using an interpreter, etc., as well as a machine language code produced by a compiler. The aforementioned hardware device may be configured to operate as one or more software modules to perform operations of the present disclosure, and vice versa.

## Claims

1. A data repeater (100, 30) comprising:
a function recognition unit (110) configured to recognize a function which the data repeater (100, 30) is to provide for received data as a communication path between one repeater management server (10) and one of multiple repeaters (50), when a fixed specific port number assigned to the function as the communication path is identified in destination port information of data received from the repeater management server (10); and
a controller (120) configured to identify a source port number in source port information of the received data, and identify a specific IP address of one of the multiple repeaters (50) which is mapped with the source port number, and transmit the data to the one of the multiple repeaters (50) specified by the specific IP address, when the function is recognized as the communication path between the repeater management server (10) and one of the multiple repeaters (50),
wherein the controller (120) is further configured to perform conversion between the specific IP address and the source port number in source port information of the received data on the basis of a mapping table in which for each of the multiple repeaters (50), a port number of the repeater management server (10) as a source port number and an IP address of the respective multiple repeater (50) are mapped.

2. The data repeater (100, 30) of claim 1, wherein the controller (120) is configured to, when the data is uplink data transmitted from one of the multiple repeaters (50) to the repeater management server (10), enable the one repeater to be specified by a specific port number of the repeater management server (10) mapped with an IP address of the one repeater in source address information of the uplink data on the basis of the mapping table by using the specific port number of the repeater management server (10) as destination address information of the uplink data.

3. The data repeater (100, 30) of claim 2, the repeater management server (10) which receives the uplink data is configured to, when a port number identified in the destination port information of the uplink data is determined to be a port number in the mapping table, recognize that the uplink data is received from the one repeater to which the port number is assigned.

4. A repeater management device (10) comprising:
a generator (12) configured to assign a port number of the repeater management device (10) to each of repeaters (RUs, remote units, 50) connected to a data repeater (100, 30), and generate a mapping table between the assigned port number and an IP address of the each of repeaters (50); and
a transceiver (14) configured to identify, by referring to the mapping table, a port number of the repeater management device (10) corresponding to a repeater (50) desired for communication, and transmit packets to the data repeater (100, 30) by using the identified port number corresponding to the repeater, as a source number in source port information of data transmitted to the repeater.

## Patentansprüche

1. Datenwiederholeinrichtung (100, 30), umfassend:
eine Funktionserkennungseinheit (110), die eingerichtet ist, um eine Funktion zu erkennen, die die Datenwiederholeinrichtung (100, 30) für empfangene Daten als einen Kommunikationspfad zwischen einem Wiederholeinrichtungs-Verwaltungsserver (10) und einer von mehreren Wiederholeinrichtungen (50) bereitstellen soll, wenn eine feste spezifische Portnummer, die der Funktion als der Kommunikationspfad zugewiesen ist, in Zielportinformationen von Daten, die von dem Wiederholeinrichtungs-Verwaltungsserver (10) empfangen werden, identifiziert wird; und
eine Steuerung (120), die eingerichtet ist, um eine Quellenportnummer in Quellenportinformationen der empfangenen Daten zu identifizieren und eine spezifische IP-Adresse einer der mehreren Wiederholeinrichtungen (50) zu identifizieren, die der Quellenportnummer zugeordnet ist, und die Daten an der einen der mehreren Wiederholeinrichtungen (50) zu senden, der durch die spezifische IP-Adresse spezifiziert ist, wenn die Funktion als der Kommunikationspfad zwischen dem Wiederholeinrichtungs-Verwaltungsserver (10) und einer der mehreren Wiederholeinrichtungen (50) erkannt wird,
wobei die Steuerung (120) ferner eingerichtet ist, um eine Umwandlung zwischen der spezifischen IP-Adresse und der Quellenportnummer in Quellenportinformationen der empfangenen Daten auf der Grundlage einer Zuordnungstabelle durchzuführen, in der für jede der mehreren Wiederholeinrichtungen (50) eine Portnummer des Wiederholeinrichtungs-Verwaltungsservers (10) als Quellenportnummer und eine IP-Adresse der jeweiligen mehreren Wiederholeinrichtung (50) zugeordnet sind.

2. Datenwiederholeinrichtung (100, 30) nach Anspruch 1, wobei die Steuerung (120) eingerichtet ist, um, wenn die Daten Uplink-Daten sind, die von einer der mehreren Wiederholeinrichtungen (50) an den Wiederholeinrichtungs-Verwaltungsserver (10) gesendet werden, zu ermöglichen, dass die eine Wiederholeinrichtung durch eine spezifische Portnummer des Wiederholeinrichtungs-Verwaltungsservers (10) spezifiziert wird, die einer IP-Adresse der einen Wiederholeinrichtung in Quellenadressinformationen der Uplink-Daten auf der Grundlage der Zuordnungstabelle zugeordnet wird, indem die spezifische Portnummer des Wiederholeinrichtungs-Verwaltungsservers (10) als Zieladressinformationen der Uplink-Daten verwendet wird.

3. Datenwiederholeinrichtung (100, 30) nach Anspruch 2, wobei der Wiederholeinrichtungs-Verwaltungsserver (10), der die Uplink-Daten empfängt, eingerichtet ist, um zu erkennen, dass die Uplink-Daten von der einen Wiederholeinrichtung empfangen werden, dem die Portnummer zugewiesen ist, wenn eine Portnummer, die in den Zielportinformationen der Uplink-Daten identifiziert ist, als eine Portnummer in der Zuordnungstabelle bestimmt wird.

4. Wiederholeinrichtungs-Verwaltungsvorrichtung (10), umfassend:
einen Generator (12), der eingerichtet ist, um jede der Wiederholeinrichtungen (Ferneinheiten, 50), die mit einer Datenwiederholeinrichtung (100, 30) verbunden sind, eine Portnummer der Wiederholeinrichtungs-Verwaltungsvorrichtung (10) zuzuweisen und eine Zuordnungstabelle zwischen der zugewiesenen Portnummer und einer IP-Adresse jede der Wiederholeinrichtungen (50) zu erzeugen; und
einen Sendeempfänger (14), der eingerichtet ist, um durch Bezugnahme auf die Zuordnungstabelle eine Portnummer der Wiederholeinrichtungs-Verwaltungsvorrichtung (10) zu identifizieren, die einer zur Kommunikation gewünschten Wiederholeinrichtung (50) entspricht, und Pakete an die Datenwiederholeinrichtung (100, 30) unter Verwendung der identifizierten Portnummer, die der Wiederholeinrichtung entspricht, als eine Quellenportnummer in Quellenportinformationen von Daten, die an die Wiederholeinrichtung gesendet werden, zu senden.

## Revendications

1. Répéteur de données (100, 30) comprenant :
une unité de reconnaissance de fonction (110) configurée pour reconnaître une fonction que le répéteur de données (100, 30) doit assurer pour des données reçues en tant que chemin de communication entre un serveur de gestion de répéteurs (10) et l'un de multiples répéteurs (50), lorsqu'un numéro de port spécifique fixe assigné à la fonction de chemin de communication est identifié dans des informations de port de destination de données reçues en provenance du serveur de gestion de répéteurs (10) ; et
un contrôleur (120) configuré pour identifier un numéro de port de source dans des informations de port de source des données reçues, et identifier une adresse IP spécifique de l'un des multiples répéteurs (50) qui est mise en correspondance avec le numéro de port de source, et transmettre les données audit répéteur des multiples répéteurs (50) spécifié par ladite adresse IP spécifique lorsque la fonction est reconnue comme le chemin de communication entre le serveur de gestion de répéteurs (10) et l'un des multiples répéteurs (50),
dans lequel le contrôleur (120) est en outre configuré pour effectuer une conversion entre l'adresse IP spécifique et le numéro de port de source présent dans des informations de port de source des données reçues en fonction d'une table de mise en correspondance dans laquelle, pour chacun des multiples répéteurs (50), un numéro de port du serveur de gestion de répéteurs (10) en tant que numéro de port de source et une adresse IP du multiple répéteur respectif (50) sont mis en correspondance.

2. Répéteur de données (100, 30) selon la revendication 1, dans lequel le contrôleur (120) est configuré pour, lorsque les données sont des données de liaison montante transmises depuis l'un des multiples répéteurs (50) au serveur de gestion de répéteurs (10), permettre audit répéteur d'être spécifié par un numéro de port spécifique du serveur de gestion de répéteurs (10) mis en correspondance avec une adresse IP dudit répéteur dans des informations d'adresse de source des données de liaison montante en fonction de la table de mise en correspondance, en utilisant le numéro de port spécifique du serveur de gestion de répéteurs (10) comme informations d'adresse de destination des données de liaison montante.

3. Répéteur de données (100, 30) selon la revendication 2, dans lequel le serveur de gestion de répéteurs (10) qui reçoit les données de liaison montante est configuré pour, lorsqu'un numéro de port identifié dans les informations de port de destination des données de liaison montante est déterminé comme étant un numéro de port dans la table de mise en correspondance, reconnaître que les données de liaison montante sont reçues en provenance du répéteur auquel le numéro de port est assigné.

4. Dispositif de gestion de répéteurs (10) comprenant :
un générateur (12) configuré pour assigner un numéro de port du dispositif de gestion de répéteurs (10) à chacun de répéteurs (unités distantes, RU, 50) connectés à un répéteur de données (100, 30), et générer une table de mise en correspondance entre le numéro de port assigné et une adresse IP de chacun des répéteurs (50) ; et
un émetteur-récepteur (14) configuré pour identifier, en se référant à la table de mise en correspondance, un numéro de port du dispositif de gestion de répéteurs (10) correspondant à un répéteur (50) souhaité pour la communication, et transmettre des paquets au répéteur de données (100, 30) en utilisant le numéro de port identifié correspondant au répéteur, en tant que numéro de source dans des informations de port de source de données transmises au répéteur.
